# EUROPÄISCHE PATENTANMELDUNG

(11) **EP 3 048 121 A1**
(43) Veröffentlichungstag der Anmeldung: **27.07.2016**
(21) Anmeldenummer: 15151985.7
(22) Anmeldetag: 21.01.2015
(51) Int. Cl.: C08G 18/48, C08G 18/66, C08G 18/67, C08G 18/75, C08G 18/08, C08G 18/12, C08G 18/24, C08G 18/32, C08G 18/38, C08G 18/42, C09J 175/14

(54) **Stabilisierte Polyurethan-Vinyl-Hybrid-Dispersionen**

(71) Anmelder: Henkel AG & Co. KGaA, 40589 Düsseldorf (DE); Max-Planck-Gesellschaft zur Förderung der Wissenschaften e.V., 80539 München (DE)
(72) Erfinder: Taden, Andreas, 40597 Düsseldorf (DE); Landfester, Katharina, 55122 Mainz (DE); Keller, Hannes, 40227 Düsseldorf (DE); Kim, Kwangsoo, 330-891 Choongnam (KR)

(57) **Zusammenfassung**

Die vorliegende Erfindung betrifft wässrige Polyurethan-Vinyl-Hybrid-Dispersionen, in denen das Polyurethan-Vinyl-Hybridpolymer mit einer Kern-Schale-Morphologie in Form einer stabilen Miniemulsion vorliegt. Dabei bildet in den Partikeln das Polyurethan die Schale und das Vinylpolymer den Kern und beide sind kovalent verknüpft. Die Dispersionen werden mittels eines Verfahrens hergestellt, das umfasst (i) Herstellen eines Vinyl-funktionalisierten Polyurethan-Präpolymers durch Umsetzen von Polyolen und mindestens einem organischen Polyisocyanat, vorzugsweise in Gegenwart eines geeigneten Katalysators, wobei die Polyole umfassen: mindestens ein Polyol, das mindestens eine ionische oder potentiell ionische hydrophile Gruppe aufweist; mindestens ein nichtionisches Polyol; und mindestens ein Vinyl-funktionalisiertes Polyol; (ii) Mischen des Polyurethan-Präpolymers aus Schritt (i) mit mindestens einem Vinylmonomer um eine homogene Polyurethan-Präpolymer/Vinylmonomer-Mischung zu ergeben, wobei das mindestens eine Vinylmonomer eine Vinylgruppe aufweist, die bezogen auf den Q-Wert mindestens etwa zweifach reaktiver ist als die Vinylgruppe des mindestens einen Vinyl-funktionalisierten Polyols (C); (iii) Dispergieren der homogenen Polyurethan-Präpolymer/Vinylmonomer-Mischung in eine kontinuierliche wässrige Phase derart, dass eine stabile Miniemulsion der Polyurethan-Präpolymer/Vinylmonomer-Mischung in der wässrigen Phase gebildet wird; und (iv) Polymerisieren der Vinylmonomere und der Vinylgruppen des Polyurethan-Präpolymers, um die wässrige Polyurethan-Vinyl-Hybrid-Dispersion zu ergeben. Die so erhältlichen Polyurethan-Vinyl-Hybrid-Dispersionen haben vielfältige Anwendungsbereiche, wie zum Beispiel Klebstoffe und Beschichtungsmittel, aber auch Waschmittel und Kosmetika.

## Beschreibung

Die vorliegende Erfindung betrifft wässrige Polyurethan-Vinyl-Hybrid-Dispersionen, in denen das Polyurethan-Vinyl-Hybridpolymer mit einer Kern-Schale-Morphologie in Form einer stabilen Miniemulsion vorliegt. Dabei bildet in den Partikeln das Polyurethan die Schale und das Vinylpolymer den Kern und beide sind kovalent verknüpft. Die Polyurethan-Vinylpolymer-Hybridpartikel werden kolloidal durch ionische und nicht-ionische Gruppen, die während der Polymerisation direkt in das Polyurethan eingebaut werden, stabilisiert, wohingegen die Stabilisierung der Morphologie der Partikel durch die Anbindung von Polyurethan und Vinylpolymeren über die Vinylgruppen im Polyurethan erfolgt. Die Dispersionen werden durch Homogenisierung einer Mischung eines Vinyl-funktionalisierten Polyurethan-Präpolymers und eines Vinylmonomers mittels eines Hochscherprozesses in Wasser, um eine Miniemulsion herzustellen, und anschließende Polymerisierung der Vinylmonomere und Vinylgruppen sowie etwaiger Kettenverlängerung des Präpolymers hergestellt. Die so erhältlichen Polyurethan-Vinyl-Hybrid-Dispersionen haben vielfältige Anwendungsbereiche, wie zum Beispiel Klebstoffe und Beschichtungsmittel, aber auch Waschmittel und Kosmetika.

Polyurethane (PUs) und Acrylate werden in großem Maßstab für eine Reihe von kommerziellen Anwendungen hergestellt, wie zum Beispiel Klebstoffe und Beschichtungen. Die Eigenschaften beider Stoffklassen können abhängig von der Zusammensetzung über einen weiten Bereich eingestellt werden, aber beide haben anwendungsbezogen unterschiedliche Vorteile. PUs haben zum Beispiel eine hohe Alterungsbeständigkeit und Abriebbeständigkeit, wohingegen Acrylate eine hohe Widerstandsfähigkeit gegenüber Hydrolyse zeigen. Die Kombination beider Materialien in Form von Hybridmaterialien ist für viele Anwendungsgebiete sehr interessant.

Eine Möglichkeit für die Herstellung von Hybrid-Dispersionen geht von zuvor hergestellten PU-Dispersionen (PUDs) aus, zu welchen dann Acrylatmonomere oder eine Monomeremulsion gegeben und radikalisch polymerisiert werden. Dieser Ansatz hat den Nachteil, dass neben den gewünschten Hybridpartikeln auch Homopolymerpartikel entstehen. Des Weiteren ist aufgrund der Notwendigkeit, dass die Acrylatmonomere in die PU-Partikel diffundieren müssen, die Auswahl auf bestimmte Acrylate beschränkt. Es ist ferner häufig erforderlich Lösungsmittel einzusetzen, um die gewünschten Partikel herzustellen oder stabil zu dispergieren.

Ein anderer Ansatz richtet sich auf die direkte Synthese der Polyurethane und Acrylate in Miniemulsionen. Dazu werden die PU-Bestandteile, d.h. Polyole und Isocyanate, direkt in Wasser emulgiert und polymerisiert. Das hat den Nachteil, dass sich in Gegenwart von Wasser durch die Reaktion der Isocyanatgruppen mit dem Wasser Harnstoffgruppen bilden, die unerwünscht sind, da sie sehr starke Wasserstoffbrückenbindungen ausbilden, die die Flexibilität der Filme nach der Trocknung verringern.

Bekannte Hybridmaterialien aus PU und Acrylaten leiden ferner darunter, dass es unter bestimmten Bedingungen, insbesondere erhöhter Temperatur, zu einer makroskopischen Phasentrennung kommt, was zu einer Verschlechterung der mechanischen Eigenschaften der Materialien führt.

Schließlich gewinnen zwar wässrige Polyurethan-Dispersionen in technischer und ökologischer Hinsicht mehr und mehr an Bedeutung, da sie toxikologisch und ökologisch unbedenklicher sind als Polyurethane in organischen Lösungsmitteln, aber die Stabilität derartiger Emulsionen und Dispersionen ist häufig unzureichend. Das liegt insbesondere daran, dass die meisten Polyurethane nur mit Hilfe von Emulgatoren und extremen Scherkräften in wässrige Emulsionen und Dispersionen überführt werden können, wobei allerdings keine dauerhaft stabilen Emulsionen gebildet werden. Aus diesem Grund gehen Bestrebungen dahin, selbst-emulgierende Polyurethane zu entwickeln, die in Wasser ohne externe Emulgatoren spontan stabile Dispersionen bilden. Dazu werden bei der Polymerisation der Polyurethane bereits stabilisierende ionische oder nichtionische Moleküle eingesetzt, die in die Polymerkette eingebaut werden und später dazu dienen die Polyurethanpartikel in wässriger Umgebung zu stabilisieren.

Abgesehen von Problemen aufgrund unerwünschter Hydrolyse, unzureichender Hydrophobizität und verringerter Stabilität bei hohen Feststoffgehalten, ist es nach wie vor schwierig zur Kristallisation neigende oder dazu fähige Polyurethane stabil als Partikel in einer wässrigen Phase zu dispergieren. Besonders mit Polyurethanen auf Basis von Polyesterpolyolen wird nur sehr schwer eine gute Langzeitstabilität erreicht. Die Partikel weisen dabei üblicherweise eine sehr breite Partikelgrößenverteilung auf und die dispergierten Polyurethane haben keine besonders hohen Molekulargewichte.

Eine derartige Kristallisation von Polyurethanen ist aber eine wichtige thermo-mechanische Eigenschaften, die in bestimmten Anwendungsgebieten erwünscht ist, da über die Kontrolle der Temperatur schnell und reversibel physikalische Wechselwirkungen zwischen den Polymerketten kontrolliert werden können. Der starke Anstieg der Viskosität der mit der physikalischen Quervernetzung einhergeht ist insbesondere für Klebstoffe von Bedeutung.

Angesichts der existierenden Probleme bei der Herstellung von stabilen Dispersionen von Polyurethan- und Polyurethan-Vinyl-Hybrid-Dispersionen, besteht daher nach wie vor Bedarf an Systemen, die Polyurethan- und Polyurethanhybridpartikel stabil in einer wässrigen Phase dispergieren können und dabei Partikel mit den gewünschten physikalischen und/oder mechanischen Eigenschaften bereitstellen.

Die vorliegende Erfindung basiert dabei auf der Erkenntnis der Erfinder, dass sich derartige Dispersionen durch eine spezielle Auswahl der zur Herstellung der Polyurethane-Vinyl-Hybridpolymer verwendeten Polyole in Kombination mit bestimmten Homogenisierungsverfahren realisieren lassen.

In einem ersten Aspekt richtet sich die vorliegende Erfindung daher auf ein Verfahren zur Herstellung einer wässrigen Polyurethan-Vinyl-Hybrid-Dispersion, wobei die Polyurethan-Vinyl-Hybridpartikel eine Kern-Schale-Morphologie aufweisen, wobei Schale im Wesentlichen aus Polyurethan und der Kern im Wesentlichen aus Vinylpolymer besteht, dadurch gekennzeichnet, dass das Verfahren umfasst:
(i) Herstellen eines Vinyl-funktionalisierten Polyurethan-Präpolymers durch Umsetzen von Polyolen und mindestens einem organischen Polyisocyanat, vorzugsweise in Gegenwart eines geeigneten Katalysators, wobei die Polyole umfassen:
   (A)mindestens ein Polyol, vorzugsweise ein Polyetherpoyol, das mindestens eine ionische oder potentiell ionische hydrophile Gruppe aufweist;
   (B)mindestens ein nichtionisches Polyol, insbesondere ein nichtionisches hydrophiles Polyetherpolyol; und
   (C)mindestens ein Vinyl-funktionalisiertes Polyol, insbesondere ein Allyl-funktionalisiertes Polyol;
      wobei entweder
      (1) in einem ersten Schritt die Polyole mit Ausnahme von Polyol (C) mit dem mindestens einen organischen Polyisocyanat umgesetzt werden, wobei das mindestens eine organische Polyisocyanat in einem molaren Überschuss bezogen auf die Hydroxylgruppen der im ersten Schritt umgesetzten Polyole eingesetzt wird, um ein NCO-funktionalisiertes Polyurethan-Präpolymer zu erhalten, und in einem zweiten nachfolgenden Schritt das NCO-funktionalisierte Polyurethan-Präpolymer mit dem Polyol gemäß (C) umgesetzt wird, um ein Vinyl-terminiertes Polyurethan-Präpolymer zu erhalten; oder
      (2) alle Polyole in Form einer Polyolmischung umfassend die Polyole (A)-(C) mit dem mindestens einen organischen Polyisocyanat umgesetzt werden, wobei das mindestens eine organische Polyisocyanat in einem molaren Überschuss bezogen auf die Hydroxylgruppen der Polyole eingesetzt wird, um ein NCO-terminiertes Vinyl-funktionalisiertes Polyurethan-Präpolymer zu erhalten;
(ii) Mischen des Polyurethan-Präpolymers aus Schritt (i) mit mindestens einem Vinylmonomer um eine homogene Polyurethan-Präpolymer/Vinylmonomer-Mischung zu ergeben, wobei das mindestens eine Vinylmonomer eine Vinylgruppe aufweist, die bezogen auf den Q-Wert mindestens etwa zweifach reaktiver ist als die Vinylgruppe des mindestens einen Vinyl-funktionalisierten Polyols (C);
(iii) Dispergieren der homogenen Polyurethan-Präpolymer/Vinylmonomer-Mischung in eine kontinuierliche wässrige Phase derart, dass eine stabile Miniemulsion der Polyurethan-Präpolymer/Vinylmonomer-Mischung in der wässrigen Phase gebildet wird; und
(iv) Polymerisieren der Vinylmonomere und der Vinylgruppen des Polyurethan-Präpolymers, um die wässrige Polyurethan-Vinyl-Hybrid-Dispersion zu ergeben.

In weiteren Aspekten richtet sich die Erfindung auf die derart erhältlichen Polyurethan-Vinyl-Hybrid-Dispersionen.

Noch weitere Aspekte der Erfindung betreffen Zusammensetzungen, die die hierin beschriebenen Polyurethan-Vinyl-Hybrid-Dispersionen enthalten, insbesondere Klebstoffzusammensetzungen oder Beschichtungsmittelzusammensetzungen.

Schließlich richtet sich die Erfindung auch auf die Verwendung einer Polyurethan-Vinyl-Hybrid-Dispersion, wie sie mittels der hierin beschriebenen Verfahren erhältlich ist, als Klebstoff, Beschichtungsmittel oder Rheologie-Modifikator.

Die vorliegende Erfindung richtet sich auf Miniemulsionsverfahren zur Herstellung stabiler Polyurethan-Vinyl-Hybrid-Dispersionen, wobei das Verfahren bestimmte Mengen an Vinylfunktionellen, ionischen und nichtionischen Gruppen verwendet, die während der Polymerisation in die Polyurethan-Präpolymere eingebaut werden und diesen die gewünschte verbesserte kolloidale Stabilität (ionische und nichtionische Gruppen) bzw. verbesserte Stabilität der Partikelmorphologie (Vinylgruppen) verleihen. Überraschenderweise haben die Erfinder gefunden, dass die Verwendung der hierin beschriebenen speziellen Polyole in Kombination mit den beschriebenen Miniemulsions-Verfahren es erlaubt, stabile Hybridpartikel mit Kern-Schale-Morphologie herzustellen. Ferner sind die beschriebenen Verfahren dazu geeignet, Polyurethan(hybrid)polymere, die zur Kristallbildung neigende Gruppen oder Einheiten enthalten, in wässrigen Dispersionen zu stabilisieren. Schließlich erlauben es die beschriebenen Verfahren auch, auf die Verwendung von Lösungsmitteln zur Lösung/Emulgierung der Präpolymere vor der Homogenisierung zu verzichten, da anstelle eines Lösungsmittels Vinylmonomere verwendet werden, die anschließend copolymerisiert werden.

In verschiedenen Ausführungsformen der hierin beschriebenen Verfahren werden die Polyurethan-Präpolymere aus einer Mischung von Polyolen, die die gewünschten Eigenschaften aufweisen, und geeigneten Polyisocyanaten, insbesondere Diisocyanaten, die die Polyole miteinander verknüpfen synthetisiert. Es ist für den Fachmann selbstverständlich, dass dieser Ansatz auch umgekehrt durchgeführt werden kann, d.h. eine Mischung von Polyisocyanaten mit den gewünschten Eigenschaften mit entsprechenden Polyolen/Diolen als Verknüpfungsreagenz umgesetzt werden kann. Im Folgenden wird bei der genaueren Beschreibung der Erfindung auf ersteren Ansatz Bezug genommen, wobei dem Fachmann allerdings klar ist, dass die folgende Beschreibung mit entsprechenden Modifikationen auch auf ein Verfahren, das eine Mischung von Polyisocyanaten als Ausgangsmaterial verwendet, anwendbar ist.

Sofern in der vorliegenden Anmeldung auf Molekulargewichte Bezug genommen wird, beziehen sich die Angaben, sofern nicht anders angegeben, auf das Zahlenmittel und nicht das Gewichtsmittel, d.h. den Mₙ-Wert.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polyesterpolyol" bedeutet somit beispielsweise mindestens eine Art von Polyesterpolyol, d.h. dass eine Art von Polyesterpolyol oder eine Mischung mehrerer verschiedener Polyesterpolyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

Die hierin verwendeten Polyole, die mindestens eine ionische oder potentiell ionische hydrophile Gruppe aufweisen sind vorzugsweise Verbindungen mit anionischen oder potentiell anionischen Gruppen. Beispiele für solche Verbindungen sind Polyetherpolyole, die mindestens eine, vorzugsweise pro Molekül genau eine, anionische oder potentiell anionische hydrophile Gruppe aufweisen.

Generell sind als ionische Gruppen geeignet, ohne darauf beschränkt zu sein, Sulfat-, Sulfonat-, Phosphat-, Phosphonat-, Carboxylat-, und Ammonium-Gruppen, sowie ionische Heterozyklen, insbesondere stickstoffhaltige, 5-6-gliedrige Heterozyklen. Potentiell ionische Gruppe schließen ein, sind aber nicht beschränkt auf solche, die ausgewählt werden aus der Gruppe bestehend aus Carbonsäure- und Amino-Gruppen sowie ungeladenen Heterozyklen, insbesondere stickstoffhaltigen, 5-6-gliedrigen Heterozyklen. "Potentiell ionisch" bezieht sich hierin auf die Eigenschaft in einer wässrigen Umgebung bei entsprechendem pH-Wert als ionische Verbindung vorzuliegen. Polyole, die derartige ionische oder potentiell ionische Gruppen enthalten werden beispielsweise in US 3,756,992, US 3,479,310 und US 4,108,814 beschrieben.

Ganz besonders bevorzugt sind Sulfonatgruppen. Sulfonatgruppen aufweisende Diole werden beispielsweise in DE 2446440 und DE 2437218 beschrieben. Erfindungsgemäß bevorzugt werden Polyetherpolyole, insbesondere solche auf Basis von Propylenglykol, die mindestens eine Sulfonatgruppe enthalten. Geeignet ist beispielsweise ein alkoxyliertes, insbesondere propoxyliertes, Addukt von einem Alkendiol, insbesondere 2-Buten-1,4-diol, und einem Sulfit, insbesondere einem Hydrogensulfit, wie NaHSO₃.

Die hierin verwendeten (potentiell) ionischen Polyole haben in verschiedenen Ausführungsformen ein mittleres Molekulargewicht Mₙ im Bereich von 200 bis 1000, vorzugsweise 300 bis 500 g/mol. Besonders bevorzugt ist ein alkoxyliertes, insbesondere propoxyliertes, Addukt von einem Alkendiol, insbesondere 2-Buten-1,4-diol, und einem Sulfit, insbesondere einem Hydrogensulfit, wie NaHSO₃, mit einem Molekulargewicht Mₙ von ungefähr 430.

Die (potentiell) ionischen Polyole, insbesondere anionische Polyetherpolyole, werden in den Polyolmischungen in Mengen von 0,1 bis 10 Gew.-%, insbesondere 1-6 Gew.-% jeweils bezogen auf die Polyolmischung eingesetzt. Bei Mengen kleiner als 0,1 Gew.-%, gegebenenfalls auch schon kleiner als 1 Gew.-% kann die Hydrophilizität zu gering sein, um eine stabile Dispersion zu ermöglichen, bei Mengen größer 10 Gew.-% können die nachteiligen Wirkungen auf die Stabilisierung aufgrund von Phasentrennungen innerhalb der Partikel (Mikrophasentrennung in den Partikeln) überwiegen.

Die (potentiell) ionischen Polyole werden vorzugsweise in Mengen eingesetzt, die derart bemessen sind, dass der Gehalt an ionischen Gruppen im Polyurethan-Präpolymer maximal 20 Milliäquivalente, vorzugsweise maximal 10 Milliäquivalente pro 100 g Präpolymer beträgt.

Die in der Polyolmischung eingesetzten nichtionischen Polyole sind vorzugsweise nichtionische Polyetherpolyole. In verschiedenen Ausführungsformen sind die eingesetzten nichtionischen Polyole/Polyetherpolyole solche, die nicht kristallisierend sind, d.h. nicht zur Kristallbildung fähig sind. In verschiedenen Ausführungsformen handelt es sich um Polylalkylenglykole, beispielsweise Polyethylenglykol, Polypropylenglykol, Polybutylenglykol, Poly(neo)pentylenglykol, oder Copolymere der genannten miteinander. In verschiedenen Ausführungsformen umfasst das Polyalkylenglykol Homo- oder Copolymer ein Polypropylenglykol Homo- oder Copolymer, insbesondere ein Polypropylenglykol Homopolymer oder ein Polypropylenglykol/Polyethylenglykol (Block)-Copolymer, vorzugsweise mit einem Ethylenoxidgehalt von 45 mol% oder weniger, noch bevorzugter 10 % oder weniger. Ebenfalls bevorzugt ist ein Polyethylenglykol Homopolymer oder ein Polypropylenglykol/Polyethylenglykol (Block)-Copolymer, vorzugsweise mit einem Ethylenoxidgehalt von 10 mol% oder mehr, noch bevorzugter 45 % oder mehr. Besonders bevorzugt sind Mischungen der beiden zuvor genannten Homo- und Copolymere von Ethylenglykol und Propylenglykol. Als Polypropylenglykole können beispielsweise PPG400-Diol oder PPG600-Diol eingesetzt werden.

In verschiedenen, besonders bevorzugten Ausführungsformen machen aber Ethylenoxid-Einheiten nicht mehr als 5 Gew.-% des Präpolymers aus. Der Grund dafür ist, dass größere Anteile an den sehr hydrophilen Ethylenoxid-Einheiten zu einer unerwünschten Phasentrennung innerhalb der Polyurethansegmente des Hybridpolymers führen können, insbesondere wenn der Polyurethanteil größere Mengen an zur Kristallisation neigenden Polyoleinheiten enthält.

Die hierin verwendeten nichtionischen Polyole haben in verschiedenen Ausführungsformen ein mittleres Molekulargewicht Mₙ im Bereich von 1000 bis 4000, vorzugsweise 1500 bis 2500 g/mol.

Die nichtionischen Polyole, insbesondere Polyetherpolyole, werden in den Polyolmischungen in Mengen von 0,5 bis 15 Gew.-%, insbesondere 3-10 Gew.-% jeweils bezogen auf die Polyolmischung eingesetzt. Wie bereits erwähnt, ist der Gehalt an Ethylenoxid-Einheiten in dem Präpolymer vorzugsweise kleiner als 5 Gew.-%, da höhere Anteile die Phasentrennung innerhalb der Polyurethananteile der Partikel fördern können.

In den hierin beschriebenen Verfahren werden die Vinylgruppen-haltigen Polyole und die Vinylmonomere so ausgewählt, dass die Reaktivität der Vinylgruppe der Vinylmonomere deutlich größer ist, als die Reaktivität der Vinylgruppen der Polyole. Das ist insofern von Bedeutung, als dass eine höhere Reaktivität der Vinylmonomere verhindert, dass bereits in einer sehr frühen Phase der radikalischen Polymerisation der Vinylgruppen eine Vernetzung von Polyurethan-Präpolymer und Vinylpolymer stattfindet. Das ist insofern entscheidend, da die frühe Bildung von Pfropf-Copolymeren einer Phasentrennung in PU-reiche und Vinylpolymer-reiche Phasen entgegenwirkt und somit die Bildung der Kern-Schale-Morphologie verzögern oder sogar verhindern kann. Durch die Verwendung von Vinylgruppen im Polyurethanpräpolymer, die gegenüber den Vinylmonomeren deutlich weniger reaktiv sind, kommt es vorzugsweise zu einer Polymerisation der Vinylmonomere und Bildung von Vinylpolymeren, die die Phasentrennung zwischen PU-reicher Schalenphase und Vinylpolymer-reicher Kernphase fördern. Die Vernetzung von PU-Teil und Vinylpolymer-Teil findet dann hauptsächlich in den späteren Phasen der Polymerisation statt, wenn die Phasentrennung und die Bildung der Kern-Schale-Morphologie bereits stattgefunden haben. In diesem Fall ergeben sich dann Kern-Schale-Partikel, in denen der Vinylpolymerkern kovalent mit der PU-Schale vernetzt ist, was einer makroskopischen Phasenseparation im getrockneten Film entgegenwirkt.

In verschiedenen Ausführungsformen der Erfindung sind die Vinylgruppen der Vinylmonomere daher mindestens 2-fach, vorzugsweise mindestens 3- bis 4-fach, noch bevorzugter mindestens 8-bis 10-fach reaktiver als die Vinylgruppen der Polyole, die in das Polyurethan-Präpolymer eingebaut werden. Als Maß für die Reaktivität der Vinylgruppen können beispielsweise die Q/e-Werte herangezogen werden. Diese ergeben sich aus einer semiempirischen Methode der Zuordnung von Reaktivitäten Q und Polaritäten e an Monomerverbindungen, die von Alfrey und Price beschrieben wurde. Mit dieser Methode lassen sich Reaktivitätsverhältnisse allein aufgrund dieser beiden Parameter berechnen. Die grafische Auftragung der Reaktivitäten verschiedener Monomere im Q-e-Koordinatensystem wird auch als Q-e-Schema bezeichnet. Die Parameter Q und e werden aus experimentellen Befunden bestimmt und in Relation zum Standard Styrol gesetzt, der willkürlich die Werte Q=1 und e= -0,8 zugeordnet bekommen hat.

Die Q- und e-Werte können beispielsweise aus ¹³C-NMR-Daten errechnet werden, wie von Borchardt und Dalrymple (Journal of Polymer Science (1982), 20: 1745-1764) beschrieben.

In verschiedenen Ausführungsformen der Erfindung beträgt der Q-Wert des Vinylmonomers 0,1 oder mehr und der Q-Wert des Vinyl-funktionalisierten Polyols 0,01 oder weniger. In weiteren bevorzugten Ausführungsformen beträgt der e-Wert des Vinylmonomers 0,03 oder mehr, vorzugsweise 0,05 oder mehr, bevorzugter 0,1 oder mehr, am bevorzugtesten 0,2 oder mehr und der e-Wert des Vinyl-funktionalisierten Polyols -0,6 oder weniger.

Die oben angegebenen Q- und e-Wert Verhältnisse werden beispielsweise erreicht, wenn die Vinylgruppe des mindestens einen Vinylmonomers eine Acryl- oder Methacrylgruppe und die Vinylgruppe des mindestens einen Vinyl-funktionalisierten Polyols eine Allylgruppe, insbesondere eine Allylethergruppe ist. Alternativ kann das mindestens eine Vinylmonomer beispielsweise Styrol sein.

In verschiedenen Ausführungsformen der Erfindung umfasst das mindestens eine Vinylmonomer ein Vinylmonomer, dessen Homopolymere eine Glasübergangstemperatur T_{g} von kleiner 30°C, vorzugsweise kleiner 0°C, noch bevorzugter kleiner -30°C, besonders bevorzugt kleiner -50°C aufweisen. Das Vinylmonomer ist in verschiedenen Ausführungsformen aber so gewählt, dass es für die Dispergierung/Homogenisierung als Lösungsmittel für das Polyurethan-Präpolymer dienen kann.

Als Vinylmonomer sind beispielsweise Ester von ungesättigten, polymerisierbaren Carbonsäuren geeignet. Zum Beispiel kann das Vinylmonomer ein Ester von (Meth)acrylsäure, Crotonsäure und/oder Itaconsäure mit Polyetherglykolen, aliphatischen, cycloaliphatischen oder aromatischen Alkoholen sein. Weitere geeignete Verbindungen schließen ein, sind aber nicht beschränkt auf aromatische Vinylverbindungen, wie Styrol, alpha-Methylstyrol und Vinyltoluol, Ester von Vinylalkoholen, insbesondere Fettsäurevinylester, N-Alkylamide von ungesättigten polymerisierbaren Carbonsäuren, wie (Meth)acrylsäure, und weitere copolymerisierbare olefinische Monomere, wie (Meth)acrylnitril, Vinylchlorid, Ethylen, Butadien und Isopren.

Vorzugsweise sind die Vinylmonomere Styrol-, Acrylat- oder Methacrylatmonomere, insbesondere ausgewählt aus hydrophoben Acrylat- und Methacrylatmonomeren, vorzugsweise aus Alkylestern der Acryl- oder Methacrylsäure mit Monoalkoholen mit 4-20, vorzugsweise 4 bis 12 Kohlenstoffatomen. Besonders bevorzugte Vinylmonomere schließen Butyl(meth)acrylat, 2-Ethylhexyl(meth)acrylat, Octyl(meth)acrylat und Dodecanyl(meth)acrylat ein. Generell sind die Methacrylate gegenüber den korrespondieren Acrylaten bevorzugt.

Ebenfalls als Vinylmonomere geeignet sind Verbindungen mit mehreren Vinyl- oder (Meth)Acrylatgruppen, die dann zur Quervernetzung der Vinylpolymerketten eingesetzt werden können. Das kann vorteilhaft sein, um die Kernmorphologie des Vinylpolymerkerns zu stabilisieren. Eine beispielshafte Verbindungsklasse sind (Poly-/Oligo-)Alkylenglykoldiacrylate, wie z.B. Tripropylenglykoldiacrylat. Diese werden abhängig von dem gewünschten Vernetzungsgrad üblicherweise in Mengen von 0 bis 5 Gew.-% bezogen auf das Gesamtgewicht der Vinylmonomere eingesetzt.

Es ist ebenfalls möglich Mischungen verschiedener Vinylpolymere einzusetzen. Es ist aber generell bevorzugt, dass auch in solchen Mischungen der Anteil hydrophober Monomere überwiegt, insbesondere größer als 50, bevorzugter größer als 70 Gew.-% bezogen auf das Gesamtgewicht der Vinylmonomere beträgt. Hydrophile Vinylmonomere werden daher insbesondere als copolymerisierbare Monomere in Mischungen mit hydrophoben Monomeren eingesetzt. Beispiele für hydrophile Vinylmonomere schließen ein, ohne Einschränkung, kurzkettige Alkylester von (Meth)Acrylsäure, wie beispielsweise Methylmethacrylat, Acrylamid, Methacrylamid, Hydroxyalkyl(meth)acrylate wie Hydroxyethylacrylat oder -methacrylat, Hydroxypropyl(meth)acrylat, Hydroxy-butyl(meth)acrylat, Hydroxyethylacrylamid; N-Vinyllactame, wie N-Vinylpyrrolidon, Ethylenglykolester von (Meth)acrylsäure und Teilester von Glycerol und (Meth)acrylsäure; und Ureido(meth)acrylate. Solche hydrophilen Monomere können in Anteilen zugegeben werden, um die Emulgierungseigenschaften zu verbessern. Der Anteil bezogen auf das Gesamtgewicht der Vinylmonomere beträgt dabei insbesondere bis zu 30 Gew.-%, bevorzugt bis 20 Gew.-%.

In bevorzugten Ausführungsformen werden ein oder mehrere hydrophobe Alkyl(meth)acrylate eingesetzt, insbesondere n-Butylacrylat und n-Butymethacrylat. Diese werden insbesondere in Mengen von 50 bis 80 Gew.-% bezogen auf das Gesamtgewicht der Vinylmonomere eingesetzt. Diese können mit ultrahydrophoben Alkyl(meth)acrylaten, wie beispielsweise 2-Ethylhexylmethacrylat kombiniert werden. Diese werden insbesondere in Mengen von 2 bis 20 Gew.-% bezogen auf das Gesamtgewicht der Vinylmonomere eingesetzt.

Die Begriffe "Vinyl" bzw. "Allyl", wie hierin verwendet, beziehen sich insbesondere auf die Gruppen H₂C=CRR' bzw. H₂C=CR-CR'R", wobei R, R' und R" beliebige Reste sind.

Das mindestens eine Vinyl-funktionalisierte Polyol kann vorzugsweise ein Vinylgruppen-enthaltendes Diol sein. Generell bezieht sich "Vinyl-funktionalisiertes Polyol" auf das Reaktionsprodukt einer Polyol-Verbindung und einer Verbindung mit mindestens einer Vinylgruppe. Das Reaktionsprodukt weist mindestens eine Hydroxylgruppe auf, muss aber nicht zwingend zwei oder mehr Hydroxylgruppen aufweisen. Im Fall von Vinylethern kann somit bei Verwendung eines Diols und Allylalkohol als Ausgangsstoffe ein Vinylether mit nur einer Hydroxygruppe entstehen, der aber ebenfalls noch unter den Begriff "Vinyl-funktionalisiertes Polyol" fällt. Der Begriff erfasst somit im Sinne der Erfindung Verbindungen mit mindestens einer Vinyl- und mindestens einer Hydroxylgruppe. Es ist allerdings bevorzugt, dass das Vinyl-funktionalisierte Polyol mindestens eine Vinyl- und mindestens zwei Hydroxylgruppen enthält.

Die Art des verwendeten Vinyl-funktionalisierten Polyols kann davon abhängen, ob es (zusammen mit den anderen Polyolen) in die Polyurethankette eingebaut wird, wobei hier Verbindungen mit mindestens 2 Hydroxylgruppen bevorzugt verwendet werden, oder ob es mit den Termini eines NCO-funktionalisierten Polyurethan-Präpolymers verknüpft wird, wobei hier vorzugsweise Verbindungen mit nur einer Hydroxylgruppe verwendet werden.

In verschiedenen bevorzugten Ausführungsformen ist das Vinyl-funktionalisierte Polyol ein Allyl-funktionalisiertes Polyol, insbesondere ein Polyol-Allylether ist. Für die Herstellung eines Vinylterminierten Polyurethan-Präpolymers wird der Polyol-Allylether vorzugsweise ausgewählt aus Monoethern von Allylalkohol mit einem Diol, insbesondere Ethandiol, 1,2-Propandiol, 1,3-Propandiol, 1,4-Butandiol, 1,6-Hexandiol, und Mischungen davon. Bei der Herstellung eines NCOterminierten, Vinyl-funktionalisierten Polyurethan-Präpolymers wird der Polyol-Allylether dagegen vorzugsweise ausgewählt aus Monoethern von Allylalkohol mit einem Triol oder Polyol mit mehr als drei Hydroxylgruppen, insbesondere Glycerin.

Generell ist das Vinyl-funktionalisierte Polyol vorzugsweise ein monomeres Polyol.

Die mittleren Molekulargewichte Mₙ der erfindungsgemäß eingesetzten Vinyl-funktionalisierten Polyole liegen insbesondere im Bereich von 100 bis 400 g/mol.

In verschiedenen bevorzugten Ausführungsformen der Erfindung werden in den Verfahren ferner Polyesterpolyole eingesetzt, insbesondere solche die zur Kristallisation neigen. Dabei werden insbesondere solche Polyesterpolyole bevorzugt, deren Schmelzpunkt Tₘ größer als 0°C, vorzugsweise größer als 40°C ist. Die Angabe des Schmelzpunktes bezieht sich dabei auf den Schmelzpunkt entsprechender hochmolekularer, linearer Polyester Hompolymere. Verfahren die zur Bestimmung der Schmelzpunkte geeignet sind, sind im Stand der Technik bekannt. Im verschiedenen Ausführungsformen ist der Schmelzpunkt Tₘ <100°C, insbesondere <80°C.

Die verwendeten Polyester sind vorzugsweise Polyole, d.h. weisen freie Hydroxylgruppen auf. Insbesondere handelt es sich um Polyesterdiole, d.h. (vorzugsweise lineare) Polyester die zwei endständige Hydroxylgruppen aufweisen.

Geeignete Polyester lassen sich mittels bekannter Verfahren, beispielsweise Kondensationsreaktionen, aus Polyolen und Polysäuren, insbesondere aus Diolen und Disäuren, herstellen. Als Diole werden insbesondere aliphatische Alkandiole, wie Ethandiol, 1,2-Propandiol, 1,3-Propandiol, 1,4-Butandiol, Neopentylglycol, 1,6-Hexandiol, und Mischungen davon eingesetzt. Prinzipiell ist auch der Einsatz zyklischer Diole oder aromatischer Diole denkbar, bevorzugt wird allerdings die Verwendung linearer aliphatischer Diole, wie der vorstehend genannten, insbesondere von 1,2-Propandiol, 1,3-Propandiol, 1,4-Butandiol und 1,6-Hexandiol, ganz besonders bevorzugt von 1,4-Butandiol. Als Disäuren werden vor allem Dicarbonsäuren eingesetzt und hier vorzugsweise lineare aliphatische Dicarbonsäuren. Beispiele für geeignete Säuren schließen ein, sind aber nicht beschränkt auf Oxalsäure, Malonsäure, Bernsteinsäure, Glutarsäure, Adipinsäure, Pimelinsäure, Suberinsäure und Mischungen davon. Auch hier ist es prinzipiell möglich zyklische oder aromatische Dicarbonsäuren, wie beispielsweise Phthalsäure, Terephthalsäure oder Isophthalsäure einzusetzen, die resultierenden Polyester haben allerdings im Vergleich zu solchen die mit aliphatischen Dicarbonsäuren hergestellt sind deutlich erhöhte Schmelz- und Glasübergangstemperaturen. Ein besonders bevorzugt eingesetzter Polyester ist Poly(tetramethylen adipat) (PTMA), welches durch eine Kondensationsreaktion aus 1,4-Butandiol und Adipinsäure darstellbar ist.

Alternativ können geeignete Polyester auch aus zyklischen Estern, insbesondere Lactonen, oder Hydroxycarbonsäuren synthetisiert werden. Ein besonders bevorzugt eingesetzter Ester ist hierbei ε-Caprolacton, das Lacton der ω-Hydroxycapronsäure, wobei der Polyester daraus durch ringöffnende Polymerisation darstellbar ist.

Die zur Bildung der Polyurethan-Präpolymere eingesetzten Polyesterpolyole haben üblicherweise ein mittleres Molekulargewicht Mₙ von 500 bis 10000, vorzugsweise 1000 bis 5000, insbesondere 2000-3500 g/mol.

Die Polyesterpolyole werden in den Polyolmischungen in Mengen von 40 bis 95 Gew.-%, insbesondere 60-85 Gew.-% jeweils bezogen auf die Polyolmischung eingesetzt. Bei Mengen größer 95 Gew.-%, gegebenenfalls auch schon größer 85 Gew.-% kann der Gesamtgehalt an hydrophilen ionischen bzw. nichtionischen Gruppen, die zur kolloidalen Stabilisierung der Partikel benötigt werden, zu niedrig sein, was sich nachteilig auf die Stabilität auswirken kann. Bei Mengen unter 40 Gew.-% haben die Partikel nicht mehr die gewünschten physikalischen Eigenschaften.

Die in den hierin beschriebenen Verfahren eingesetzten Polyole können daher, jeweils bezogen auf das Gesamtgewicht der Polyole, umfassen:
(a) 0,1-10 Gew.-%, insbesondere 0,5-6 Gew.-%, des mindestens einen Polyols, vorzugsweise Polyetherpoyols, das mindestens eine ionische oder potentiell ionische hydrophile Gruppe aufweist;
(b) 0,5-15 Gew.-%, insbesondere 3-10 Gew.-%, des mindestens einen nichtionischen Polyols, vorzugsweise nichtionischen hydrophilen Polyetherpolyols;
(c) 0,1 bis 10 Gew.-%, insbesondere 0,2-2 Gew.-%, des mindestens einen Vinyl-funktionalisierten Polyols; und
(d) optional 40-95 Gew.-%, insbesondere 60-85 Gew.-%, des mindestens einen Polyesterpolyols, das einen Schmelzpunkt Tₘ von größer 0°C, vorzugsweise größer 40°C besitzt.

In bevorzugten Ausführungsformen ergeben die Mengen der Polyole (a)-(d) zusammen 100 Gew.-%, d.h. das Polyurethan-Präpolymer enthält keine anderen Polyolkomponenten.

In verschiedenen Ausführungsformen der Erfindung in denen Polyol (d) nicht verwendet wird, kann der Anteil der nichtionischen Polyetherpolyole entsprechend erhöht werden, d.h. auf beispielweise 40 bis 99,8 Gew.-%, insbesondere 80-96,5 Gew.-%.

In verschiedenen Ausführungsformen der hierin beschriebenen Verfahren weist das Polyurethan-Präpolymer ein mittleres Molekulargewicht Mₙ im Bereich von 3000-25000, vorzugsweise 3000-15000, insbesondere 5000 bis 10000 g/mol auf. Die gewünschten Molekulargewichte werden durch die Verwendung entsprechender Mengen an Polyolen und Polyisocyanaten eingestellt und mittels geeigneter Messverfahren, wie Endgruppenanalyse (NCO Titration nach Spiegelberger EN ISO 11909, OH-Zahl in mg KOH/g nach DIN 53240), bestimmt. Entsprechende Kalkulationen und Verfahren sind dem Fachmann ohne weiteres bekannt.

Wie bereits oben beschrieben beträgt der Gehalt an ionischen Gruppen im Polyurethan-Präpolymer vorzugsweise maximal 20 Milliäquivalente, vorzugsweise maximal 10 Milliäquivalente pro 100 g Präpolymer.

Das Präpolymer enthält weniger als 5 Gew.-% Ethylenoxid-Einheiten, d.h. das mittels der hierin beschriebenen Verfahren synthetisierte Polyurethan-Präpolymer enthält bezogen auf sein Gesamtgewicht weniger als 5 Gew.-% EO-Einheiten.

Es ist ferner bevorzugt, das organische Polyisocyanat im molaren Überschuss relativ zu der Polyolmischung einzusetzen, um ein NCO-funktionalisiertes Polyurethan-Präpolymer zu erhalten. Wenn die Polyisocyanate in molarem Überschuss eingesetzt werden, beträgt das OH/NCO Äquivalentverhältnis vorzugsweise 1:1,1 bis 1:4, bevorzugter 1:1,2 bis 1:1,3.

Das organische Polyisocyanat ist eine Verbindung mit mindestens zwei Isocyanat-Gruppen (-NCO), insbesondere ein Diisocyanat. Es kann allerdings unter bestimmten Umständen vorteilhaft sein, kleine Mengen von Isocyanaten mit einer Funktionalität größer 2 einzusetzen ist. In derartigen Fällen werden insbesondere Polyisocyanate auf Basis von Hexamethylendiisocyanat oder polymeres Diphenylmethandiisocyanat verwendet. Geeignete Polyisocyanate schließen ein, sind aber nicht beschränkt auf aromatische Diisocyanate, wie beispielsweise Diphenylmethandiisocyanat (MDI), polymeres MDI (PMDI) und/oder Toluoldiisocyanat (TDI), und aliphatische Diisocyanate, wie beispielsweise Hexamethylendiisocyanat (HDI), Isophorondiisocyanat (IPDI) und/oder Methylen-4,4-bis(cyclohexyl)diisocyanat (H12MDI), oder Mischungen davon. Obwohl sowohl aromatische als auch aliphatische Polyisocyanate verwendet werden können, sind erfindungsgemäß aliphatische Polyisocyanate, insbesondere Diisocyanate, wie IPDI und HDI, bevorzugt.

Zur Bildung des Präpolymers werden die Polyole und die Polyisocyanate vorzugsweise gemischt, wobei die Mischung erhitzt werden kann. Das kann insbesondere dann erforderlich sein, wenn die verwendeten Polyole bei Raumtemperatur fest sind und geschmolzen werden müssen, um die Polyolmischung zu bilden. In bevorzugten Ausführungsformen werden die Polyole kombiniert und unter Rühren und Vakuum auf ungefähr 70 bis 95°C, beispielsweise ungefähr 75°C, erhitzt, um sie zu trocknen. Die Präpolymersynthese erfolgt üblicherweise durch Zugabe der Isocyanate und bei einer Temperatur die über der Schmelztemperatur der Polyole, insbesondere der Polyesterpolyole, liegt, vorzugsweise im Bereich zwischen 70 und 95°C, über einen Zeitraum von ungefähr 1 bis ungefähr 5 Stunden, vorzugsweise ungefähr 2-3 Stunden. Die Reaktion erfolgt in Gegenwart eines Katalysators, der zugegeben wird, vorzugsweise eines Zinn- oder Zink-basierten Katalysators, wie beispielsweise Zink-Ethylhexanoat, Dibutylzinndilaurat (DBTDL) oder Dimethylzinn-Dineodecanoat, wobei letzteres beispielsweise als Fomrez UL-28 kommerziell erhältlich ist. Die Reaktion wird durchgeführt bis der freie Isocyanat-Gehalt nahe dem kalkulierten Wert ist, wie mittels Standardtitration mit Dibutylamin bestimmt. Bevorzugte Werte für den freien Isocyanatgehalt liegen im Bereich von 0,2 bis 2 Gew.-%, vorzugsweise 0,7 bis 1,8 Gew.-% relativ zu der Gesamtmenge an Polyol und Polyisocyanat in der Mischung. Sobald der gewünschte Wert erreicht ist, wird die Temperatur reduziert, beispielsweise auf 60 °C.

"Ungefähr", wie hierin im Zusammenhang mit Zahlenangaben verwendet, bezieht sich auf ± 10 %, vorzugsweise ± 5 % des Zahlenwerts auf welchen sich die Angabe bezieht. "Ungefähr 70 °C" bedeutet somit 70 ± 7, vorzugsweise 70 ± 3.5 °C.

Wie bereits oben erwähnt wird das Isocyanat vorzugsweise im molaren Überschuss bezogen auf die stöchiometrische Konzentration, die erforderlich ist um alle Hydroxylgruppen vollständig umzusetzen, eingesetzt. Der Überschuss kann ein OH/NCO Äquivalent-Verhältnis von 1:1.1 bis 1:4 sein. Vorzugsweise ist die Menge an eingesetztem Polyisocyanat 20 % bis 150 % größer als die erforderliche stöchiometrische Konzentration um alle Hydroxylgruppen umzusetzen.

Das gebildete Präpolymer wird dann mit den Vinylmonomeren kombiniert, insbesondere in den Vinylmonomeren oder der Mischung von Vinylmonomeren gelöst oder dispergiert. Dabei wird eine Polyurethan-Präpolymer/Vinylmonomer-Mischung gebildet. Derartige Mischungen enthalten das Polyurethan-Präpolymer bzw. die Vinylmonomere jeweils insbesondere in Mengen von 10-90 Gew.-%, vorzugsweise 15-85 Gew.-%, insbesondere 25-75 Gew.-% bezogen auf die Mischung. In verschiedenen Ausführungsformen enthält eine solche Mischung das Polyurethan-Präpolymer und die Vinylmonomere in einem Gewichtsverhältnis von 10:90 bis 90:10, vorzugsweise 20:80 bis 90:10, insbesondere 30:70 bis 90:10 oder 40:60 bis 90:10. In verschiedenen weiteren Ausführungsformen enthält eine solche Mischung das Polyurethan-Präpolymer und die Vinylmonomere in einem Gewichtsverhältnis von 10:90 bis 80:20, vorzugsweise 20:80 bis 80:20, noch bevorzugter 20:80 bis 70:30, insbesondere 30:70 bis 70:30. In verschiedenen Ausführungsformen der Erfindung werden die Mengen an Polyurethan-Präpolymer und Vinylmonomeren so gewählt, dass sich in den Partikeln ein Volumenverhältnis der Polymerphasen PU:Vinylpolymer von 10:90 bis 90:10, vorzugsweise 20:80 bis 90:10, insbesondere 30:70 bis 90:10 oder 40:60 bis 90:10 ergibt. In verschiedenen weiteren Ausführungsformen enthält eine solche Mischung das Polyurethan-Präpolymer und die Vinylmonomere in Mengen, die in dem Partikel ein Volumenverhältnis der Polymerphasen PU:Vinylpolymer von 10:90 bis 80:20, vorzugsweise 20:80 bis 80:20, noch bevorzugter 20:80 bis 70:30, insbesondere 30:70 bis 70:30 ergeben.

Um die Polyurethan-Vinyl-Hybrid-Dispersion zu bilden, wird die Polyurethan-Präpolymer/Vinylmonomer-Mischung in eine kontinuierliche wässrige Phase, üblicherweise Wasser oder eine wässrige Lösung, dispergiert bzw. emulgiert. Es kann hierbei beispielsweise erst eine Präemulsion gebildet werden, die dann in einem nachfolgenden Schritt mittels eines geeigneten Verfahren, beispielsweise eines Hochscherverfahrens, homogenisiert wird, um eine Miniemulsion zu bilden.

"Miniemulsion" bezieht sich in diesem Zusammenhang auf eine Emulsion, in der die emulgierte Phase in Form von Tröpfchen oder Partikeln, vorzugsweise mit annähernd sphärischer Form, in der kontinuierlichen Wasserphase vorliegen. Dabei haben die Tröpfchen/Partikel eine Ausdehnung in der größten Dimension, bei annähernd sphärischer Form einen Durchmesser, im Größenbereich von 10 bis 500 nm, insbesondere 50 bis 500 nm.

Schritt (iii) des hierin beschriebenen Verfahrens umfasst daher in verschiedenen Ausführungsformen die Schritte:
(a) Emulgieren der Polyurethan-Präpolymer/Vinylmonomer-Mischung in eine kontinuierliche wässrige Phase, insbesondere Wasser, um eine Präemulsion zu bilden; und
(b) Homogenisieren der Präemulsion um eine stabile Miniemulsion zu bilden.

Der Dispergier- bzw. Emulgierschritt kann bei erhöhter Temperatur, beispielsweise im Bereich von 30-60, beispielsweise ungefähr 40°C erfolgen. Zur Bildung der Präemulsion sind mechanische Rührer oder Rotor-Stator-Mischer, beispielsweise ein Ultra-Turrax-Gerät, ausreichend, zur Bildung der Miniemulsion werden vorzugsweise ein Homogenisator, beispielsweise ein Microfluidizer (wie von der Firma Microfluidics erhältlich) oder ein Ultraschallgerät eingesetzt.

Der Dispergierschritt, insbesondere der Homogenisierungsschritt, kann mittels eines Hochscherverfahrens erfolgen. Geeignete Hochscherverfahren, weisen vorzugsweise Scherraten von mindestens 1.000.000/s und/oder einen Energieeintrag pro Zeit von mindestens 10⁶ J/s*m³ auf. Die Scherrate kann mittels im Stand der Technik bekannter Verfahren berechnet werden bzw. ist für gegebene Geräte bekannt. Allgemein berechnet sich die Scherrate aus dem Verhältnis der maximalen Strömungsgeschwindigkeit (Vₘₐₓ) eines Stoffes, beispielsweise einer Flüssigkeit in einer Kapillare, und dem Radius des durchströmten Hohlkörpers. Der Energieeintrag pro Zeit ergibt sich aus der Energiedichte in J/m³ pro Zeit.

Nach dem Dispergierschritt in welchem Polyurethan-Vinyl-Hybridtröpfchen oder -partikel gebildet werden, werden die Vinylgruppen in dem Hybridmaterial, d.h. die Vinylmonomere und die Vinylgruppen im Polyurethan-Präpolymer polymerisiert. Die Polymerisierung erfolgt vorzugsweise mittels radikalischer Polymerisation. Für die Initiation der Polymerisation können geeignete Initiatoren, beispielsweise radikalische Redoxinitiatoren verwendet werden. Beispiele für solche Initiatoren schließen ein, ohne darauf beschränkt zu sein, als Oxidationsmittel Persulfate oder Hydroperoxide und als Reduktionsmittel Thioharnstoffdioxid, Ascorbinsäure, Formaldehydsulfoxilat (SFS), Tetramethylethylendiamin (TMEDA), Bruggolit 6 and 7 (FF6 and FF7) und Natriummetabisulfite. Eine geeignete Kombination besteht aus Thioharnstoffdioxid und t-Butylhydroperoxid. Die Polymerisation kann bei erhöhter Temperatur, beispielsweise bei 45-80°C durchgeführt werden.

Das in den beschriebenen Verfahren hergestellte NCO-terminierte, Vinyl-funktionalisierte Polyurethan-Präpolymer oder Polyurethan-Vinylpolymer-Hybrid kann mit einem geeigneten Kettenverlängerer oder Wasser umgesetzt werden, um alle freien NCO-Gruppen umzusetzen. Ein solcher Kettenverlängerungsschritt kann vor, nach oder gleichzeitig mit dem Polymerisationsschritt (der Vinylgruppen und -monomere) durchgeführt werden. Dazu wird zu der Miniemulsion ein geeigneter Kettenverlängerer gegeben und mit dem Präpolymer zur Reaktion gebracht. Geeignete Kettenverlängerer sind allgemein Verbindungen, die mindestens zwei Gruppen aufweisen, die gegenüber den Endgruppen des Präpolymers, üblicherweise -NCO Gruppen, reaktiv sind. Bespiele für Kettenverlängerer, die mindestens zwei terminal NCO-reaktive Gruppen enthalten, schließen ein, ohne darauf beschränkt zu sein, Diamine, wie beispielsweise Hydrazin, ein Alkylendiamin oder Cycloalkylendiamin, vorzugsweise Ethylendiamin, Isophorondiamin, Piperazin, oder Polyetheramin, und Diole, wie beispielsweise Butandiol oder 2-Butyl-2-Ethyl-1,3-propandiol. Es können auch geringe Mengen an tri- und höherfunktionellen Aminen eingesetzt werden, um Verzweigungs- bzw. Vernetzungspunkte einzuführen und so die Wärmefestigkeit der Materialien zu erhöhen. Die Kettenverlängerungsreaktion kann bis zur vollständigen Konversion der Isocyanat-Gruppen durchgeführt werden, d.h.der Kettenverlängerer wird kontinuierlich so lange zugegeben, bis keine freien Isocyanatgruppen mehr nachweisbar sind. Für die Kettenverlängerungsreaktion kann die Gegenwart eines Katalysators bzw. eine erhöhte Temperatur erforderlich sein.

Die beschriebenen Verfahren ergeben stabil in Wasser dispergierte oder dispergierbare Partikel mit einem mittleren Durchmesser im Submikrometerbereich, insbesondere im Bereich 50-500 nm. Die Partikel sind vorzugsweise im Wesentlichen monodispers, d.h. die Partikelgrößenverteilung ist sehr schmal. Die Partikel zeichnen sich durch eine Kern-Schale-Morphologie aus, wobei die Schale in wesentlichen Teilen aus dem Polyurethanteil des Hybridmaterials gebildet wird und hier insbesondere den ionischen und hydrophilen Segmenten des Polyurethananteils. D.h. die Außenseite der Schale weist die ionischen, hydrophilen Segmente auf, während die hydrophoberen Anteile des Polyurethans, beispielsweise die aus den beschriebenen Polyersterpolyolen abgeleiteten Einheiten, zum Kern hin orientiert sind. Der Kern besteht im Wesentlichen aus dem Acrylatanteil des Hybridmaterials. Um eine Entmischung des Hybridmaterials, beispielsweise bei einer Temperaturerhöhung über längere Zeit, zu verhindern, sind das Kernmaterial und das Schalenmaterial miteinander kovalent vernetzt. Das verringert die Grenzflächenenergie und wirkt somit einer Entmischung entgegen. Zusätzlich kann die strukturelle Integrität des Kerns auch durch eine Quervernetzung des Acrylats verstärkt werden.

Wie bereits oben erwähnt, betrifft die Erfindung auch die Dispersionen, die mit den hierin beschriebenen Verfahren hergestellt werden bzw. die entsprechende Polyurethan-Vinyl-Hybrid(prä)polymere und die daraus bestehenden Partikel mit Kern-Schale-Morphologie. Die Dispersionen können in verschiedenen Ausführungsformen Feststoffgehalte im Bereich von 10 bis 60 Gew.-%, vorzugsweise ungefähr 15 bis 50 Gew.-%, noch bevorzugter ungefähr 30 bis 50 Gew.-% aufweisen.

Die Polyurethan-Vinyl-Hybrid-Dispersionen können beispielsweise in Klebstoff- oder Beschichtungszusammensetzungen verwendet werden. Weitere Anwendungsgebiete schließen Lacke, Waschmittel und Kosmetika ein. Dementsprechend richtet sich die Erfindung auch auf entsprechende Zusammensetzungen, die die Dispersionen der Erfindung enthalten. Derartige Zusammensetzungen können weitere Bestandteile, wie sie im Stand der Technik üblich und bekannt sind, enthalten. Insbesondere richtet sich die Erfindung auch auf (Beschichtungs-)Filme, die die hierin beschriebenen Hybridmaterialien enthalten.

Die folgenden Beispiele dienen der Erläuterung der Erfindung, die Erfindung ist aber nicht darauf beschränkt.

### Beispiele

### Beispiel 1:

Die verwendeten Chemikalien sind in Tabelle 1 aufgelistet. Zur Herstellung der Dispersionen wurde entionisiertes Wasser verwendet. Die Vinylmonomere wurden über Molekularsieben getrocknet (3 A), alle anderen Chemikalien wurden ohne weitere Aufreinigung verwendet.

**Tabelle 1: Materialien**

| Abkürzung | Zusammensetzung/Handelsname | Hersteller |
|---|---|---|
| PTMA | Poly(tetramethylenadipat), Mₙ 3000 g·mol⁻¹ / Realkyd XTR 30110 | Arkema |
| Sulfonierter Polyether | sulfoniertes Polyetherpolyol, Mₙ 425 g·mol⁻¹ / GS-7Q | Green Polymer (Korea) |
| EO-reicher Polyether | Statistisches Ethylenoxid / Propylen oxid Copolymer, 80 Gew.% EO, Mₙ 2000 g·mol⁻¹ / K-HN-8200 | Hannong Chemicals (Korea) |
| PO-reicher Polyether | Triblock Copolymer von Propylenoxid mit Ethylenoxid Endcaps, 10 Gew.% EO, Mₙ 2000 g·mol⁻¹ / Tergitol L-61 | Dow Chemical |
| GAE | Glycerolallylether | Acros |
| NPG | Neopentylglycol | Aldrich |
| IPDI | Isophorondiisocyanat | Merck |
| DMTND | Dimethylzinnneodecanoat / Fomrez UL-28 | Momentive |
| Aceton | Aceton | Acros |
| BuA | Butylacrylat | Acros |
| UMA/MMA | Ureidomethacrylat 25 Gew.% in Methylmethacrylat | BASF |
| EHMA | 2-Ethylhexylmethacrylat | Acros |
| St | Styrol | Merck |
| TPGDA | Tripropylenglycoldiacrylat | Aldrich |
| TUD | Thioharnstoffdioxid | Acros |
| TBHP | *tert*-Butylhydroperoxid | Acros |
| MEK | Methylethylketon | Acros |
| TICA | Trichlorisocyanursäure | |
| Assoziativverdicker | Hydrophiles Polyurethan / BorchiGel L75N | Borchers |

### Polyurethan-Präpolymer Synthese:

PTMA, sulfoniertes Polyol, EO-reiches Polyol und PO-reiches Polyol wurden für 1.5 h auf 75 °C unter Vakuum (< 0.1 mbar) erhitzt, um Wasser zu entfernen. Nach dem Spülen mit Stickstoff wurden die niedermolekularen Diole GAE oder NPG zugegeben. Ein leichter Stickstoffstrom wurde während der Synthese aufrechterhalten. IPDI und DMTND (0.02 Gew.%) in Aceton wurden bei 55 bis 60 °C zugegeben und die exotherme Reaktion kontrolliert um die Temperatur unter 85 °C zu halten. Nach 30 min, wurde mehr DMTND (0.02 Gew.%) zugegeben. Die Reaktionsmischung wurde bei 80 °C gehalten bis der gewünschte NCO-Gehalt erreicht wurde; der NCO Gehalt wurde mittels eines Standard NCO Titrationsverfahrens ermittelt.

Die Zusammensetzungen der Polyurethane sind in Tabelle 2 angegeben.

**Tabelle 2: PU Präpolymer-Zusammensetzungen.**

| | PU Präpolymer 1 | PU Präpolymer 2 |
|---|---|---|
| PTMA | 583,95 g | 585,52 g |
| Sulfoniertes Polyol | 40,00 g | 40,00 g |
| EO-reiches Polyol | 16,00 g | 16,00 g |
| PO-reiches Polyol | 32,00 g | 32,00 g |
| GAE | 8,00 g | - |
| NPG | - | 6,30 g |
| IPDI | 120,05 g | 120,18 g |
| DMTND | 0,32 g | 0,32 g |
| Aceton | 7,90 g | 7,90 g |
| Gesamt | 808,22 g | 808,22 g |

### Emulsion:

Das PU Präpolymer wurde in einer Mischung von Vinylmonomeren aufgelöst. Die PU/Monomerlösung wurde bei 40 °C unter Rühren mit einem Rotor-Stator Mischer (11000 U/min; UltraTurrax T25 von IKA) in Wasser gegossen. Die Mischung wurde für zusätzliche 3 Minuten gerührt, um die Präemulsion zu ergeben.

Die Präemulsion wurde dann 4-mal bei 40 °C durch einen M-110Y Microfluidizer von Microfluidics (Kammerbedingungen: zuerst H210Z mit 200 µm Kanälen, dann H230Z mit 400 µm Kanälen) gegeben.

Die Zusammensetzungen der hergestellten Dispersionen sind in Tabelle 3 angegeben.

**Tabelle 3: Für die Herstellung der Miniemulsion verwendete Zusammensetzungen.**

| | Dispersion A, Gewichtsteile | Dispersion B, Gewichtsteile | Dispersion C, Gewichtsteile | Dispersion D, Gewichtsteile |
|---|---|---|---|---|
| PU Präpolymer 1 | 50 | 50 | 50 | - |
| PU Präpolymer 2 | - | - | - | 50 |
| BuA | 32,5 | 32,25 | 30 | 32,25 |
| UMA/MMA | 10 | 10 | 10 | 10 |
| EHMA | 5 | 5 | 5 | 5 |
| St | 2,5 | 2,5 | 2,5 | 2,5 |
| TPGDA | - | 0,25 | 2,5 | 0,25 |
| Monomere insgesamt | 50 | 50 | 50 | 50 |
| Wasser | 108 | 108 | 108 | 108 |

In den Zusammensetzungen wurde die Menge an Diacrylat (Vernetzer) variiert. Ein derartiger Vernetzer kann dabei helfen, die Morphologie der Partikel nach dem Trocknen der Dispersionen zu stabilisieren. Das Hauptmonomer ist Butylacrylat, das sehr hydrophob ist und daher die gewünschte Kern-Schale-Partikel Morphologie fördert. Zudem ist seine niedrige Glassübergangstemperatur vorteilhaft. 2-Ethylhexylmethacrylat wird als ultrahydrophober Bestandteil verwendet, um die Monomerdiffusion vor der Polymerisation zu beschränken. Styrol wird als UV-Marker eingesetzt, um bei der GPC Bewertung zwischen PU und Acrylat unterschieden zu können. Die hydrophilen Monomere Ureidomethacrylat und Methylmethacrylat werden aufgrund ihrer Lösungsmitteleigenschaften eingesetzt, um die Emulgierung zu unterstützen.

### Polymerisation:

Lösungen eines Reduktionsmittels (0.3 Gew.% TUD / 15 Gew.% Wasser; relativ zu den Monomeren) und eines Oxidationsmittels (0.2 Gew.% TBHP / 0.3 Gew.% Aceton / 0.4 Gew.% Wasser; relativ zu den Monomeren) wurden separate hergestellt. Die Miniemulsionen wurden vor der Polymerisation 5 Min mit Stickstoff gespült. Dann wurden die Initiatorlösungen separate über 20 min bei 45 °C und unter Rühren zugegeben. Nach dem Erhöhen der Temperatur auf 70 °C für 30 min, wurden die Dispersionen für 1 h bei 55 °C gerührt.

Die Eigenschaften der Dispersionen nach der Polymerisation sind in Tabelle 4 angegeben.

**Tabelle 4: Eigenschaften der Miniemulsionen.**

| Dispersion | PU Präpolymer | Vernetzungsmittel | d_{Z} / nm | PDI | Gelanteil |
|---|---|---|---|---|---|
| A | 1 | - | 318 | 0.29 | 68 Gew.% |
| B | 1 | 0.5 wt.% | 317 | 0.26 | 78 Gew.% |
| C | 1 | 5 wt. % | 400 | 0.44 | 71 Gew.% |
| D | 2 | 0.5 wt.% | 324 | 0.28 | 51 Gew.% |

Die DLS Ergebnisse der Dispersionen A, B und D sind sehr ähnlich. Die Partikelgrößen sind klein und die Größenverteilungen relativ schmal. In Dispersion C, die eine größere Menge an Vernetzungsmittel enthält, wurden größere Partikel mit einer breiteren Partikelgrößenverteilung erhalten, was unter Umständen auf schlechte Lösemitteleigenschaften des Diacrylats zurückzuführen ist. Der hohe Feststoffgehalt zwischen 44 und 45% liegt in einem Bereich der für viele kommerzielle Anwendungen sehr nützlich ist.

### Herstellung der Filme:

Für Untersuchungen auf handelsüblichen Polymeroberflächen (AFM, SEM), wurden Siliziumwafer mit den Dispersionen rotationsbeschichtet (30 s bei 3000 U/min) und dann in einem Ofen bei 70°C für 1 h vollständig getrocknet. Für weitere Untersuchungen (XRD, DSC, GPC und für Kryoschnitte) wurden die Miniemulsionen direkt in einem Ofen bei 70 °C für 1 h getrocknet.

Zur Nukleation und Optimierung von Kristallen wurden alle Filme für 1 h auf 5 °C gekühlt und dann 1 h vor der analytischen Untersuchung auf 40 °C erhitzt. Kryoschnitte wurden nach der Optimierung von Kristalliten hergestellt.

### Adhäsionstest:

Ein Assoziativverdicker wurde zu den Dispersionen zugegeben, bis eine Viskosität von 6000 mPas (Brookfield) erreicht war. 2 x 10 cm Gummistreifen (vulkanisierter, mit Kohlenstoff als Füllmaterial geschwärzter Naturkautschuk) wurden mit einem MEK getränkten Baumwolltuch abgewischt und dann für 3 min bei 60 °C getrocknet. Nach dem Aktivieren mit 2 Gew.% TICA in Aceton auf einem Baumwolltuch, wurden die Gummiproben erneut für 3 min bei 60 °C getrocknet. Dann wurden die Dispersionen mit dem Verdicker mit einem Pinsel aufgetragen und das Wasser für 3 min bei 60 °C verdampft. Die Gummistreifen wurden dann mit einem Druck von 4 bar für 10 Sekunden aneinander gepresst. Nach einer kurzen Wartezeit wurde die Adhäsionskraft mit einem Abziehtest (100 cm·min⁻¹) bestimmt und die durchschnittliche Abziehkraft aufgenommen.

## Patentansprüche

1. Verfahren zur Herstellung einer wässrigen Polyurethan-Vinyl-Hybrid-Dispersion, wobei die Polyurethan-Vinyl-Hybridpartikel eine Kern-Schale-Morphologie aufweisen, wobei die Schale im Wesentlichen aus Polyurethan und der Kern im Wesentlichen aus Vinylpolymer besteht, **dadurch gekennzeichnet, dass** das Verfahren umfasst:
(i) Herstellen eines Vinyl-funktionalisierten Polyurethan-Präpolymers durch Umsetzen von Polyolen und mindestens einem organischen Polyisocyanat, vorzugsweise in Gegenwart eines geeigneten Katalysators, wobei die Polyole umfassen:
(A) mindestens ein Polyol, vorzugsweise ein Polyetherpoyol, das mindestens eine ionische oder potentiell ionische hydrophile Gruppe aufweist;
(B) mindestens ein nichtionisches Polyol, insbesondere ein nichtionisches hydrophiles Polyetherpolyol; und
(C) mindestens ein Vinyl-funktionalisiertes Polyol, insbesondere ein Allylfunktionalisiertes Polyol;
wobei entweder
(1) in einem ersten Schritt die Polyole mit Ausnahme von Polyol (C) mit dem mindestens einen organischen Polyisocyanat umgesetzt werden, wobei das mindestens eine organische Polyisocyanat in einem molaren Überschuss bezogen auf die Hydroxylgruppen der im ersten Schritt umgesetzten Polyole eingesetzt wird, um ein NCO-funktionalisiertes Polyurethan-Präpolymer zu erhalten, und in einem zweiten nachfolgenden Schritt das NCO-funktionalisierte Polyurethan-Präpolymer mit dem Polyol gemäß (C) umgesetzt wird, um ein Vinyl-terminiertes Polyurethan-Präpolymer zu erhalten; oder
(2) alle Polyole in Form einer Polyolmischung umfassend die Polyole (A)-(C) mit dem mindestens einen organischen Polyisocyanat umgesetzt werden, wobei das mindestens eine organische Polyisocyanat in einem molaren Überschuss bezogen auf die Hydroxylgruppen der Polyole eingesetzt wird, um ein NCO-terminiertes Vinyl-funktionalisiertes Polyurethan-Präpolymer zu erhalten;
(ii) Mischen des Polyurethan-Präpolymers aus Schritt (i) mit mindestens einem Vinylmonomer um eine homogene Polyurethan-Präpolymer/Vinylmonomer-Mischung zu ergeben, wobei das mindestens eine Vinylmonomer eine Vinylgruppe aufweist, die bezogen auf den Q-Wert mindestens etwa zweifach reaktiver ist als die Vinylgruppe des mindestens einen Vinyl-funktionalisierten Polyols (C);
(iii) Dispergieren der homogenen Polyurethan-Präpolymer/Vinylmonomer-Mischung in eine kontinuierliche wässrige Phase derart, dass eine stabile Miniemulsion der Polyurethan-Präpolymer/Vinylmonomer-Mischung in der wässrigen Phase gebildet wird; und
(iv) Polymerisieren der Vinylmonomere und der Vinylgruppen des Polyurethan-Präpolymers, um die wässrige Polyurethan-Vinyl-Hybrid-Dispersion zu ergeben.

2. Das Verfahren nach Anspruch 1, **dadurch gekennzeichnet, dass**
(a) der Q-Wert der Vinylgruppe des mindestens einen Vinylmonomers 0,1 oder mehr beträgt und der Q-Wert der Vinylgruppe des mindestens einen Vinyl-funktionalisierten Polyols 0,01 oder weniger beträgt; und/oder
(b) der e-Wert der Vinylgruppe des mindestens einen Vinylmonomers 0,03 oder mehr, vorzugsweise 0,05 oder mehr, bevorzugter 0,1 oder mehr, am bevorzugtesten 0,2 oder mehr beträgt und der e-Wert der Vinylgruppe des mindestens einen Vinyl-funktionalisierten Polyols -0,6 oder weniger beträgt; und/oder
(c) die Vinylgruppe des mindestens einen Vinylmonomers eine Acryl- oder Methacrylgruppe und die Vinylgruppe des mindestens einen Vinyl-funktionalisierten Polyols eine Allylgruppe, insbesondere eine Allylethergruppe ist; und/oder
(d) das mindestens eine Vinylmonomer ein Vinylmonomer umfasst, dessen Homopolymere eine Glasübergangstemperatur T_{g} von kleiner 30°C, vorzugsweise kleiner 0°C, bevorzugter kleiner -30°C, besonders bevorzugt kleiner -50°C aufweisen; und/oder
(e) das mindestens eine Vinylmonomer ein Acrylat- oder Methacrylatmonomer ist, insbesondere ausgewählt aus hydrophoben Acrylat- und Methacrylatmonomeren, vorzugsweise aus Estern der Acryl- oder Methacrylsäure mit Monoalkoholen mit 4-20, vorzugsweise 4 bis 12 Kohlenstoffatomen.

3. Das Verfahren nach Anspruch 1 oder 2, wobei die Polyole ferner mindestens ein Polyesterpolyol, das einen Schmelzpunkt Tₘ von größer 0°C, vorzugsweise größer 40 °C, besitzt, umfassen.

4. Das Verfahren nach mindestens einem der Ansprüche 1 bis 3, **dadurch gekennzeichnet, dass** die Polyole jeweils bezogen auf das Gesamtgewicht der Polyole umfassen:
(a) 0,1-10 Gew.-%, insbesondere 0,5-6 Gew.-%, des mindestens einen Polyols, vorzugsweise Polyetherpoyols, das mindestens eine ionische oder potentiell ionische hydrophile Gruppe aufweist;
(b) 0,5-15 Gew.-%, insbesondere 3-10 Gew.-%, des mindestens einen nichtionischen Polyols, vorzugsweise nichtionischen hydrophilen Polyetherpolyols;
(c) 0,1 bis 10 Gew.-%, insbesondere 0,2-2 Gew.-%, des mindestens einen Vinyl-funktionalisierten Polyols; und
(d) optional 40-95 Gew.-%, insbesondere 60-85 Gew.-%, des mindestens einen Polyesterpolyols, das einen Schmelzpunkt Tₘ von größer 0°C, vorzugsweise größer 40°C besitzt;
wobei die Mengen der Polyole (a)-(d) zusammen vorzugsweise 100 Gew.-% ergeben.

5. Das Verfahren nach Anspruch 3 oder 4, **dadurch gekennzeichnet, dass** das mindestens eine Polyesterpolyol
(a) ein zur Kristallisation neigendes Polyesterpolyol ist; und/oder
(b) ein Polyesterdiol ist; und/oder
(c) aus Diolen, insbesondere ausgewählt aus der Gruppe bestehend aus Ethandiol, 1,2-Propandiol, 1,3-Propandiol, 1,4-Butandiol, 1,6-Hexandiol, und Mischungen davon, und Disäuren, insbesondere Dicarbonsäuren, vorzugsweise ausgewählt aus der Gruppe bestehend aus Oxalsäure, Malonsäure, Bernsteinsäure, Glutarsäure, Adipinsäure, Pimelinsäure, Suberinsäure und Mischungen davon, durch Kondensation erhältlich ist, insbesondere Poly(tetramethylen adipat) (PTMA) ist; und/oder
(d) aus zyklischen Estern, insbesondere ε-Caprolacton, durch ringöffnende Polymerisation darstellbar ist; und/oder
(e) ein mittleres Molekulargewicht von 1000 bis 5000, vorzugsweise 2000-3500 g/mol aufweist.

6. Das Verfahren nach mindestens einem der Ansprüche 1-5, **dadurch gekennzeichnet, dass** das mindestens eine Polyol, das mindestens eine ionische oder potentiell ionische hydrophile Gruppe aufweist
(a) ein Polyol, insbesondere ein Polyetherpolyol, ist, das mindestens eine, vorzugsweise genau eine, anionische oder potentiell anionische hydrophile Gruppe aufweist; und/oder
(b) eine ionische Gruppe aufweist, die ausgewählt wird aus der Gruppe bestehend aus Sulfat-, Sulfonat-, Phosphat-, Phosphonat-, Carboxylat-, und Ammonium-Gruppen, sowie ionischen Heterozyklen, insbesondere stickstoffhaltigen, 5-6-gliedrigen Heterozyklen; und/oder
(c) eine potentiell ionische Gruppe aufweist, die ausgewählt wird aus der Gruppe bestehend aus Carbonsäure- und Amino-Gruppen sowie ungeladenen Heterozyklen, insbesondere stickstoffhaltigen, 5-6-gliedrigen Heterozyklen; und/oder
(d) ein alkoxyliertes, insbesondere propoxyliertes, Addukt von einem Alkendiol, insbesondere 2-Buten-1,4-diol, und einem Sulfit, insbesondere einem Hydrogensulfit, ist; und/oder
(e) ein mittleres Molekulargewicht im Bereich von 200 bis 1000, vorzugsweise 300 bis 500 g/mol aufweist.

7. Das Verfahren nach mindestens einem der Ansprüche 1-6, **dadurch gekennzeichnet, dass** das mindestens eine nichtionische Polyol ein nichtionisches Polyetherpolyol umfasst, insbesondere ein Polyalkylenglykol Homo- oder Copolymer, wobei das Polyalkylenglykol Homo- oder Copolymer vorzugsweise
(a) ein Polypropylenglykol Homo- oder Copolymer umfasst, insbesondere ein Polypropylenglykol Homopolymer oder ein Polypropylenglykol/Polyethylenglykol (Block)-Copolymer, vorzugsweise mit einem Ethylenoxidgehalt von 45 mol% oder weniger, noch bevorzugter 10 % oder weniger;
(b) mindestens ein Polyethylenglykol Homo- oder Copolymer umfasst, insbesondere ein Polyethylenglykol Homopolymer oder ein Polypropylenglykol/Polyethylenglykol (Block)-Copolymer, vorzugsweise mit einem Ethylenoxidgehalt von 10 mol% oder mehr, noch bevorzugter 45 % oder mehr; und/oder
(c) eine Mischung aus den Polymeren gemäß (i) und (ii) umfasst;
(d) ein mittleres Molekulargewicht im Bereich von 1000 bis 4000, vorzugsweise 1500 bis 2500 g/mol aufweist.

8. Das Verfahren nach mindestens einem der Ansprüche 1-7, **dadurch gekennzeichnet, dass** das mindestens eine Vinyl-funktionalisierte Polyol
(a) ein Vinylgruppen-enthaltendes Diol ist;
(b) ein Allyl-funktionalisiertes Polyol, insbesondere ein Polyol-Allylether ist, wobei der Polyol-Allylether für die Herstellung des Vinyl-terminiertes Polyurethan-Präpolymers vorzugsweise ausgewählt wird aus Monoethern von Allylalkohol mit einem Diol, insbesondere Ethandiol, 1,2-Propandiol, 1,3-Propandiol, 1,4-Butandiol, 1,6-Hexandiol, und Mischungen davon, und der Polyol-Allylether für die Herstellung des NCOterminierten, Vinyl-funktionalisierten Polyurethan-Präpolymers vorzugsweise ausgewählt wird aus Monoethern von Allylalkohol mit einem Triol oder Polyol mit mehr als drei Hydroxylgruppen, insbesondere Glycerin,
(c) ein monomeres Polyol ist; und/oder
(d) ein mittleres Molekulargewicht im Bereich von 100 bis 400 g/mol aufweist.

9. Das Verfahren nach mindestens einem der vorangehenden Ansprüche, **dadurch gekennzeichnet, dass** Schritt (iii) umfasst:
(a) Emulgieren der Polyurethan-Präpolymer/Vinylmonomer-Mischung in eine kontinuierliche wässrige Phase, insbesondere Wasser, um eine Präemulsion zu bilden; und
(b) Homogenisieren der Präemulsion um eine stabile Miniemulsion zu bilden.

10. Das Verfahren nach mindestens einem der vorangehenden Ansprüche, **dadurch gekennzeichnet, dass** der Dispergierschritt (iii), insbesondere der Homogenisierungsschritt, mittels eines Hochscherverfahrens erfolgt, insbesondere mittels eines Hochscherverfahrens mit (a) Scherraten von mindestens 1.000.000/s, und/oder (b) einem Energieeintrag pro Zeit von mindestens 10⁶J/s*m³.

11. Das Verfahren nach mindestens einem der vorangehenden Ansprüche, **dadurch gekennzeichnet, dass** das NCO-terminierte, Vinyl-funktionalisierte Polyurethan-Präpolymer oder das Polyurethan-Vinylpolymer-Hybrid mit einem geeigneten Kettenverlängerer oder Wasser umgesetzt wird.

12. Das Verfahren nach Anspruch 11, **dadurch gekennzeichnet, dass**
(a) das NCO-terminierte, Vinyl-funktionalisierte Polyurethan-Präpolymer oder das Polyurethan-Vinylpolymer-Hybrid mit einem Kettenverlängerungsmittel, das mindestens zwei endständige NCO-reaktive Gruppen umfasst, insbesondere einem Diamin oder einem Diol, umgesetzt wird; und/oder
(b) der Kettenverlängerungsschritt vor, nach oder gleichzeitig mit Schritt (iv) durchgeführt wird.

13. Wässrige Polyurethan-Vinyl-Hybrid-Dispersion erhältlich nach dem Verfahren gemäß mindestens einem der Ansprüche 1 bis 12.

14. Klebstoff- oder Beschichtungsmittelzusammensetzung enthaltend die Polyurethan-Vinyl-Hybrid-Dispersion nach Anspruch 13.

15. Verwendung einer Polyurethan-Vinyl-Hybrid-Dispersion nach Anspruch 13 als Klebstoff, Beschichtungsmittel oder Rheologie-Modifikator.
